Europäisches Patentamt

(19) European Patent Office

Office européen des brevets

(11) Veröffentlichungsnummer: **0 090 945**

**A2**

(12) # EUROPÄISCHE PATENTANMELDUNG

(21) Anmeldenummer: **83101911.2**

(22) Anmeldetag: **26.02.83**

(51) Int. Cl.³: **B 60 K 41/02**

(30) Priorität: **07.04.82 DE 3213012**

(43) Veröffentlichungstag der Anmeldung:
**12.10.83 Patentblatt 83/41**

(84) Benannte Vertragsstaaten:
**AT BE CH FR GB IT LI LU NL SE**

(71) Anmelder: **Delwing, Dieter**
**Im Rötel 21**
**CH-6300 Zug(CH)**

(72) Erfinder:
**Der Erfinder hat auf seine Nennung verzichtet**

(74) Vertreter: **Neubauer, Hans-Jürgen, Dipl.-Phys.**
**Fauststrasse 30**
**D-8070 Ingolstadt(DE)**

(54) **Kupplungsbetätigungseinrichtung einer Freilaufvorrichtung in einem Kraftfahrzeug.**

(57) Eine Kupplungsbetätigungseinrichtung in einem Kraftfahrzeug soll durch ein Kupplungspedal und zusätzlich und unabhängig durch eine Freilaufautomatik gesteuert werden können. Dazu wird vorgeschlagen, zusätzlich zu einem Kupplungspedal (12) einen mit einem durch die Freilaufautomatik steuerbaren Zweiwegeventil (15) verbundenen hydraulischen Hilfskolben (2) vorzusehen, welcher auf die einen Kupplungshebel (23) betätigenden Mittel, wie eine Flüssigkeitssäule oder einen Seilzug oder dgl. wirkt. Durch den hydraulischen Hilfskolben (2) wird dadurch unabhängig vom Kupplungspedal (12) die Kupplung öffenbar. Zur Ansteuerung des hydraulischen Hilfskolbens (2) wird das Zweiwegeventil (15) mit Hilfe zweier Elektromagneten (18 und 19) betätigt, wobei ein Hubraum (7) des Hilfskolbens (2) entweder mit einer Druckleitung (17) einer Druckquelle oder mit einer Abflußleitung (16) verbunden wird.

Fig. 1

PATENTANWALT

# DIPL.-PHYS. HANS-J. NEUBAUER 0090945

EUROPEAN PATENT ATTORNEY

Herr

Dieter Delwing

Im Rötel 21

CH - 6300 Zug

Fauststraße 30
D-8070 Ingolstadt

Telefon (08 41) 7 24 12
Telegramm neupat Ingolstadt
Telex 5 5809 nepa d

P 29DE/83/89

## Kupplungsbetätigungseinrichtung einer Freilaufvorrichtung in einem Kraftfahrzeug

Die Erfindung betrifft eine Kupplungsbetätigungseinrichtung einer Freilaufvorrichtung in einem Kraftfahrzeug gemäß dem Oberbegriff des Anspruchs 1.

Wegen der zunehmenden Rohölverknappung wird es erforderlich, Kraftfahrzeuge möglichst energiesparend zu betreiben. Ein Weg dazu ist die sogenannte intermittierende Fahrweise. Dabei wechseln Beschleunigungsphasen und antriebsfreies Rollen im Freilauf einander ab.

Bei Kraftfahrzeugen mit einer üblichen Kupplung ist ein Kupplungspedal mit Hilfe eines Seilzugs, z. B. eines flexiblen Bowdenkabels, mit einem Kupplungshebel an der Kupplung verbunden. Eine weitere Ausführungsform einer üblichen Kupplung besteht darin, daß das Kupplungspedal mit einem hydraulischen Geberzylinder und dieser über einen hydraulischen Nehmerzylinder mit dem Kupplungshebel verbunden sind. Für den eingangs erwähnten Freilaufbetrieb eignen sich diese Ausführungen nicht, da während des Freilaufbetriebs ständig das Kupplungspedal gedrückt oder auf Leergang geschaltet werden müßte. Dies ist unbequem und nicht praktikabel.

Es ist bereits bekannt (DE-OS 2 104 934), beim Schalten der Gänge eine Kupplungsbetätigung vorzusehen, die unabhängig von einer Betätigung des Kupplungspedals arbeitet. Dabei wird über einen Schaltkontakt, meist einen Sensorschalter am Gangschalthebel, eine elektronische Schaltung angesteuert, die Impulse an Elektromagnete abgibt. Die Elektromagnete steuern Ventile, die eine kompliziert aufgebaute hydraulische Steuereinheit mit Druck versorgen, die den Druck der Verbindungsleitung zwischen einem Geber- und Nehmerzylinder zuführt. Dadurch wird unabhängig von einer Betätigung des Kupplungspedals die Kupplung geöffnet und nach Beendigung des Schaltvorgangs durch die Schaltelektronik wieder geschlossen. Die bekannte Ausführung hat den Zweck, kurze Schaltzeiten mit definierten Einrückgeschwindigkeiten der Kupplung unabhängig vom jeweiligen Fahrgeschick eines Fahrers zu erzielen. Um dies zu erreichen, ist ein sehr aufwendiger Aufbau eines zusätzlich zum Geber- und Nehmerzylinder erforderlichen hydraulischen Steuerventils erforderlich, das aus vielen Einzelteilen kompliziert gefertigt ist. Dadurch ist eine solche Einrichtung teuer sowohl in der Herstellung als auch in der Montage, was sich gerade bei der Großserienproduktion von Kraftfahrzeugen negativ auswirkt. Weiter dürfte das kompliziert aufgebaute Steuerventil relativ störanfällig und wartungsintensiv sein.

Aufgabe der Erfindung ist es demgegenüber, eine Kupplungsbetätigungseinrichtung einer Freilaufvorrichtung in einem Kraftfahrzeug zu schaffen, die bei einfachem Aufbau zur Erzielung eines Freilaufeffekts geeignet ist.

Diese Aufgabe wird mit den kennzeichnenden Merkmalen des Anspruchs 1 gelöst.

Gemäß Anspruch 1 kann die Kupplung nicht nur mit dem Kupplungspedal sondern auch mit einer zusätzlichen Betätigungseinrichtung betätigt werden. Diese zusätzliche Betätigungseinrichtung enthält eine Hilfs-Kolbenzylindereinheit, deren Hilfskolben unmittelbar auf eine Flüssigkeitssäule oder einen Seilzug wirkt, die mit dem Kupplungshebel verbunden sind. Der Hubraum des Hilfskolbens ist dabei mit einer Druckquelle verbindbar. Die Drucksteuerung wird mit Hilfe eines Zweiwegeventils durchgeführt, das mit zwei Elektromagneten von einer Schaltposition in die andere umgesteuert werden kann. Die Elektromagneten sind dabei mit Impulsen anzusteuern, wodurch die Ventilspindel von einer stabilen Endlage in die andere gebracht wird.

Durch die Impulsansteuerung wird erreicht, daß bei Stromausfall am Fahrzeug die Stellung des Ventils nicht plötzlich verändert wird, wie dies bei einem Ventil mit Federvorspannung der Fall wäre. Bei einem plötzlichen Stromausfall, beispielsweise im Freilaufbetrieb, wird der Fahrzustand daher nicht automatisch dadurch geändert, daß die Kupplung plötzlich schließt und das Fahrzeug dadurch für den Fahrer überraschend gefährlich abgebremst wird.

Ein weiteres Merkmal der Erfindung besteht darin, daß die Kupplungsbetätigungseinrichtung so gestaltet ist, daß das Kupplungspedal auch dann betätigt werden kann, d. h. nicht gesperrt ist, wenn die Kupplung durch den Hilfskolben geöffnet ist. Dies ist zweckmäßig, da der Fahrer im Gefahrenfall instinktiv sowohl auf die Bremse wie auch auf das Kupplungspedal tritt und das Kupplungspedal dabei nicht in ungewohnter Weise blockiert ist.

Ein weiteres Merkmal ermöglicht bei der hydraulischen Übertragung der Bewegung des Kupplungspedals einen automatischen Ausgleich der Kupplungsbelagabnützung.

Die Unteransprüche beziehen sich auf weitere vorteilhafte Ausgestaltungen der Erfindung.

Weitere Einzelheiten, Merkmale und Vorteile der Erfindung ergeben sich aus der nachfolgenden Beschreibung dreier Ausführungsformen anhand der Zeichnung.

Es zeigen

Fig. 1    eine Kupplungsbetätigungseinrichtung, bei der die Betätigung der Kupplung rein hydraulisch erfolgt, im Ruhezustand,

Fig. 2    die Kupplungsbetätigungseinrichtung nach Fig. 1 bei einer Betätigung durch ein Kupplungspedal,

Fig. 3    die Kupplungsbetätigungseinrichtung nach Fig. 1 bei der Betätigung mit Hilfe eines Hilfskolbens bei unbetätigtem Kupplungspedal,

Fig. 4    die Kupplungsbetätigungseinrichtung nach Fig. 1 bei der Betätigung durch den Hilfskolben und das Kupplungspedal,

Fig. 5    die Kupplungsbetätigungseinrichtung mit einer Seilzugbetätigung im Ruhezustand,

Fig. 6    Kupplungsbetätigungseinrichtung entsprechend der Fig. 5 bei Betätigung der Kupplung mit Hilfe eines Kupplungspedals,

Fig. 7  Kupplungsbetätigungseinrichtung entsprechend

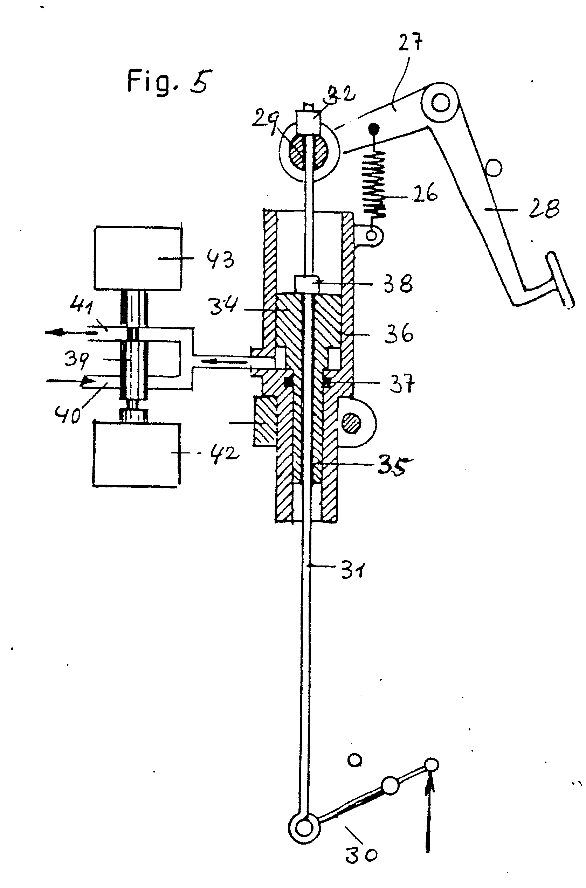

Fig. 5 bei Betätigung der Kupplung mit einem
Hilfskolben,

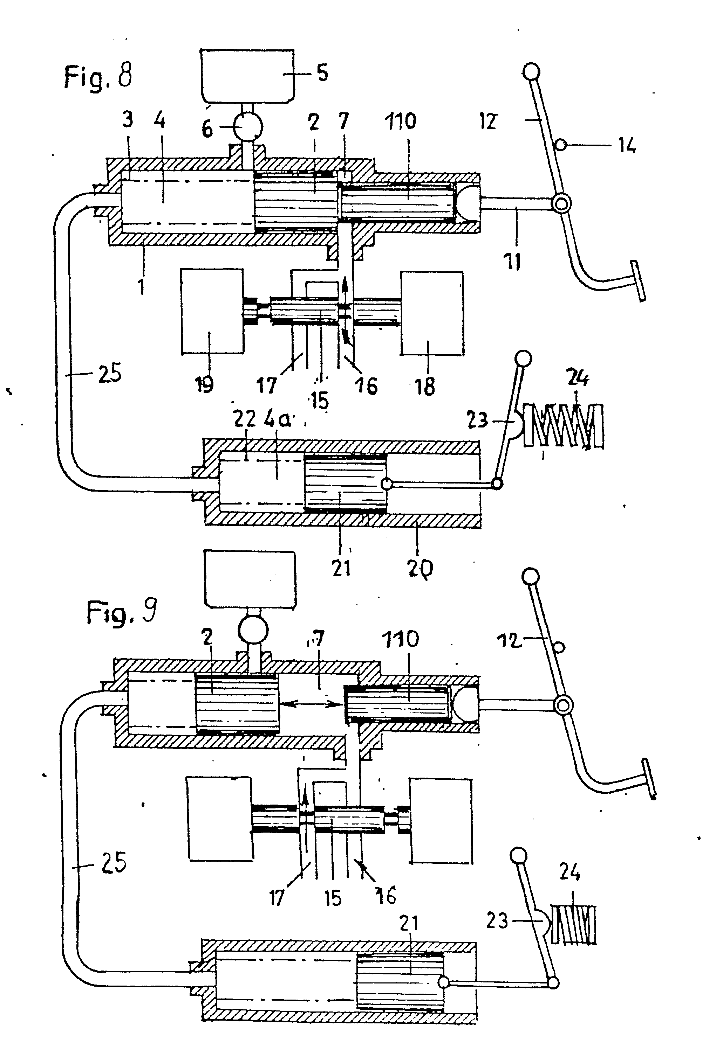

Fig. 8  eine dritte Ausführungsform einer Kupplungsbetätigungseinrichtung mit einem Kolbenschieber im
unbetätigten Zustand,

Fig. 9  die Kupplungsbetätigung entsprechend Fig. 8 bei
Betätigung mit Hilfe des Hilfskolbens bei unbetätigtem Kupplungspedal.

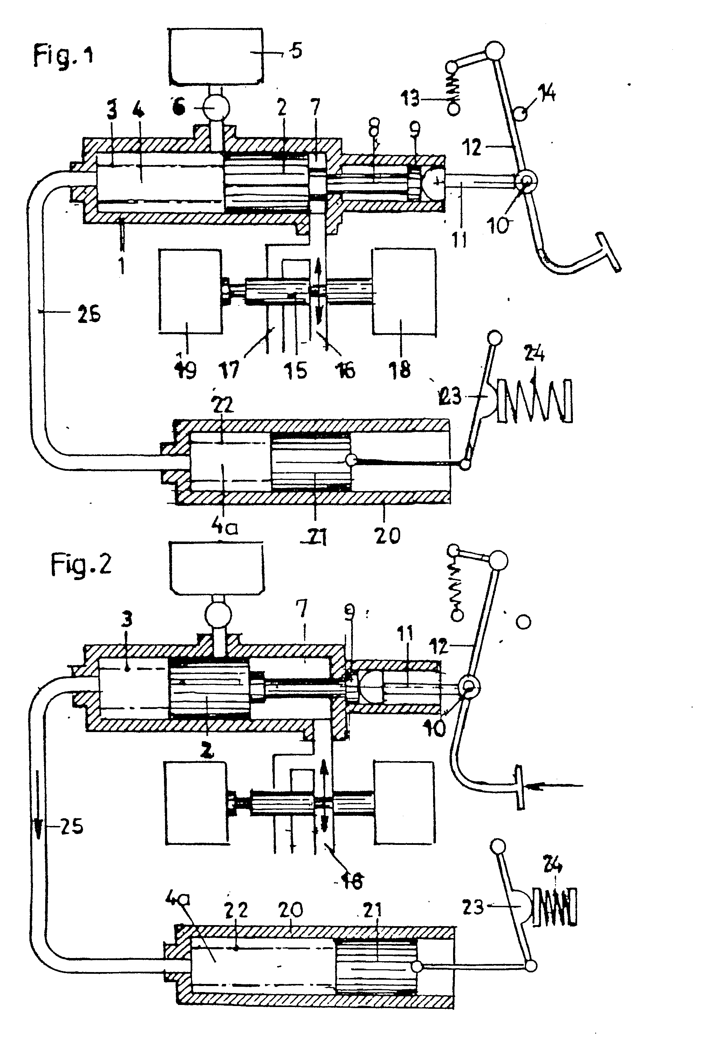

In Fig. 1 ist in einen Geberzylinder 1 ein Kolben 2 beweglich eingesetzt und mit einer Feder 3 belastet. Links
und rechts des Kolbens 2 erstreckt sich innerhalb des
Geberzylinders 1 je ein Kolbenhubraum 4 und 7. Der Hubraum 4 ist mit einem Ölvorratsbehälter 5 über ein Rückschlagventil 6 verbunden. Eine mit dem Kolben 2 verbundene Kolbenstange 8, die abgedichtet aus dem Geberzylinder
1 führt, stößt mit ihrem rechten Ende 9 auf das linke
Ende einer Schubstange 11, die über ein Lager 10 von
einem Kupplungspedal 12 bewegbar ist. Die Bewegung des
mit einer Feder 13 belasteten Kupplungspedals 12 ist
durch einen Anschlag 14 zum Fahrer hin begrenzt.

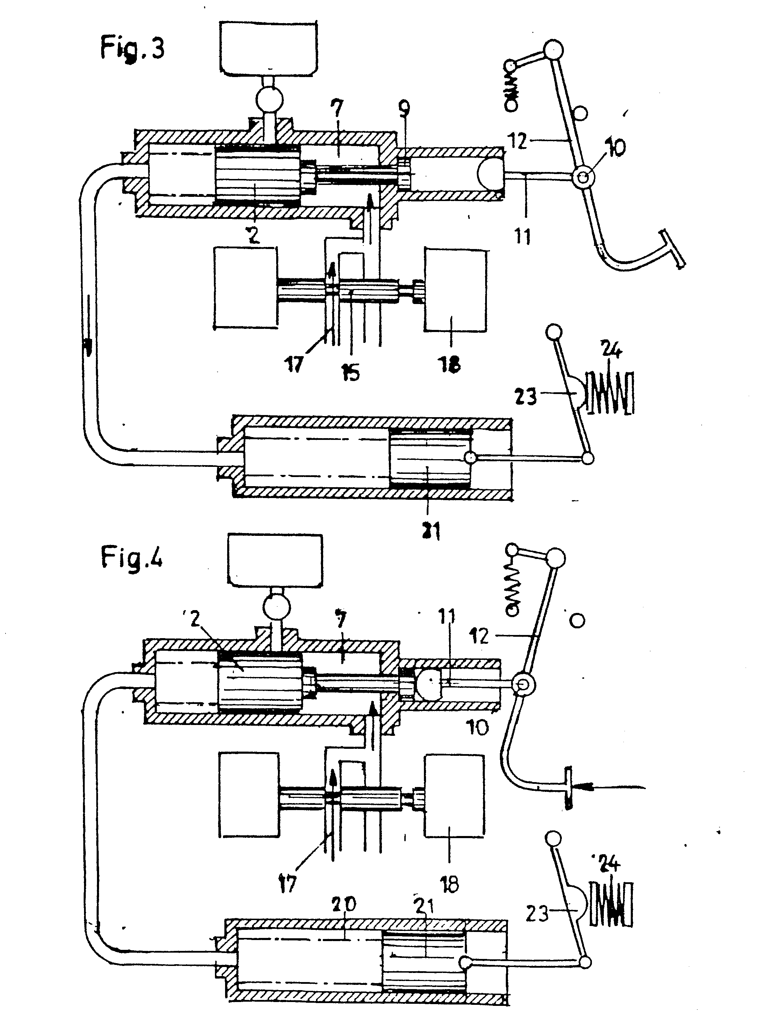

Der Hubraum 7 des Kolbens 2 ist mit einem Zweiwegeventil
15 verbunden, durch das der Hubraum 7 entweder mit einer
Abflußleitung 16 - wie in Fig. 1 und Fig. 2 gezeigt -
oder mit einer Druckleitung 17 - wie in Fig. 3 und Fig. 4
gezeigt - verbunden werden kann. Eine Ventilstange im
Zweiwegeventil 15 wird durch Elektromagnete 18, 19 abwechselnd durch kurze Stromstöße betätigt und entsprechend in ihre linke oder rechte Position gebracht.

Der linke Hubraum 4 des Kolbens 2 ist über eine Rohrleitung 25 mit einem Hubraum 4a eines in einem Nehmerzylinder
angeordneten und mit einer Feder 22 belasteten Nehmerkolbens 21 verbunden. Der Nehmerkolben 21 wirkt auf einen mit einer Kupplungsfeder 24 belasteten Kupplungshebel 23. Die an den Kupplungshebel 23 sich anschließende bekannte Kupplung, beispielsweise eine Einscheibentrockenkupplung, ist nicht weiter dargestellt.

Aufgrund der getroffenen Anordnung, insbesondere der beiden Federn 3, 22 sowie des Rückschlagventils 6 an dem Ölvorratsbehälter 5 wird dann, wenn die Lage des Nehmerkolbens 21 sich durch die Abnützung des Kupplungsbelags der Kupplung verändert (im gezeichneten Beispiel nach rechts wandert), das Flüssigkeitsvolumen der beiden Hubräume 4 und 4a aus dem Ölvorratsbehälter 5 über das Rückschlagventil autoamtisch nachgeführt und ergänzt. Die Abnützung des Kupplungsbelags beeinträchtigt somit die Funktion der erfindungsgemäßen Kupplungsbetätigungseinrichtung nicht.

In Fig. 2 ist der Zustand dargestellt, in dem das Kupplungspedal 12 betätigt ist. Der Kolben 2, dessen Hubraum 7 nach wie vor über das Zweiwegeventil 15 mit der Abflußleitung 16 verbunden ist, d. h. es steht kein Druck im Hubraum 7 an, ist durch die Schubstange 11 bis zum Anschlag 9 am Ende der Kolbenstange 8 in den Geberzylinder 1 gegen die Kraft der Feder 3 geschoben. Durch die hydraulische Kopplung wird damit auch der Nehmerkolben 21 im Nehmerzylinder 20 verschoben und der Kupplungshebel 23 gegen die Kraft der Kupplungsfeder 24 zum Öffnen der Kupplung betätigt. Nach dem Loslassen des Kupplungspedals 12 wird bei entsprechender Dimensionierung der angreifenden Federn, 3, 13, 22 und 24 das Kupplungspedal 12 und die Kolben 2, 21 in ihre Ausgangsstellung entsprechend der Fig. 1 zurückbewegt, wobei die Kupplung wieder geschlossen wird.

In Fig. 3 ist der Zustand dargestellt, bei dem das Kupplungspedal 12 nicht betätigt ist, die Kupplung jedoch durch die nicht näher dargestellte Freilaufschaltung, die die Elektromagnete 18, 19 steuert, geöffnet ist. Dazu wurde der Elektromagnet 18 kurz unter Strom gesetzt und damit über das Zweiwegeventil 15 durch eine Verschibung dessen Kolbenstange der Hubraum 7 des Kolbens 2 von der Abflußleitung 16 abgetrennt und mit der Druckleitung 17 verbunden. Durch den sich im Hubraum 7 aufbauenden Druck wurde der Kolben 2 unabhängig von der Stellung des Kupplungspedals 12 bis zum Anschlag 9 on den Geberzylinder 1 geschoben. Wie im Fall der Fig. 2 wurde damit auch der Nehmerkolben 21 verschoben und der Kupplungshebel 23 gegen die Kraft der Kupplungsfeder 24 zum Öffnen der Kupplung betätigt. Zum Schließen der Kupplung wird von der nicht dargestellten Steuereinrichtung ein Stromimpuls an den Elektromagneten 9 gegeben, der das Zweiwegeventil 15 wieder umsteuert und den Hubraum 7 mit der Abflußleitung 16 verbindet. Durch die Kraft der angreifenden Federn 3, 13, 22, 24 wird die sich im Hubraum 7 befindliche Hydraulikflüssigkeit in die Abflußleitung 16 zurückgedrückt, so daß sich die Kolben 2, 21 wieder in ihre Asugangsstellung entsprechend Fig. 1 bewegen und damit die Kupplung geschlossen wird.

Aus Fig. 4 ist ersichtlich, daß auch dann, wenn der Kolben 2 über das Zweiwegeventil 15 zum Öffnen der Kupplung betätigt wurde, das Kupplungspedal 12 gegen die Kraft der Feder 13 durchgetreten werden kann. Das Kupplungspedal 12 wird somit bei einer Betätigung durch die Freilaufautomatik nicht blockiert.

In Fig. 5 bis 7 ist eine zweite Ausführungsform einer Kupplungsbetätigungseinrichtung dargestellt. An einem mit einer Feder 26 belasteten Arm 27 eines Kupplungspedals 28 ist drehbar ein Bolzen 29 gelagert, durch dessen Bohrung ein Seilzug 31 oder dgl. freibeweglich geführt ist. Dieser Seilzug 31 ist mit einem Kupplungshebel 30 verbunden, der mit einer nicht dargestellten Kupplungsfeder belastet ist und zur Betätigung an einer nicht dargestellten Kupplung angreift. Am oberen Ende des Seilzugs 31 ist ein Anschlag 32 angeordnet, an dem sich der Arm 27 des Kupplungshebels 28 abstützt und damit der Seilzug 31 in die Richtung zum Öffnen der Kupplung beim Durchtreten des Kupplungspedals 28 geführt wird. In Fig. 5 ist der Zustand gezeichnet, in dem das Kupplungspedal 28 nicht durchgetreten ist und die Kupplung geschlossen ist.

Der Seilzug 31 führt weiter durch eine zentrale Bohrung eines hydraulischen Hilfskolbens 34 und durch dessen Kolbenstange 35. Der Hilfskolben 34 ist in einem Zylinder 36 freibeweglich angeordnet und die Kolbenstange 35 ist mit einer Lippendichtung 37 abgedichtet.

Am Seilzug 31 ist im Bereich des oberen Endes des Hilfskolbens 34 ein zweiter Anschlag 38 angeordnet, an den sich der Hilfskolben 34 anlegen kann und bei dessen Bewegung der Seilzug 31 in die Richtung zum Öffnen der Kupplung mitgenommen wird.

Der Hubraum des Hilfskolbens 34 ist mit einem Zweiwegeventil 39 verbunden, das mit Hilfe zweier Elektromagneten 42, 43 alternierend betätigt werden kann und dadurch den Hubraum entweder mit einer Druckleitung 40 oder mit einer Abflußleitung 41 verbindet. In Abbildung 5 ist der Hubraum des Hilfskolbens 34 durch das Zweiwegeventil 39 mit der Abflußleitung 41 verbunden. Dadurch wird der Hilfskolben 34 über den von der nicht dargestellten Kupplungsfeder belasteten Seilzug 31 und seinen Anschlag 38 in seiner unteren Endlage gehalten.

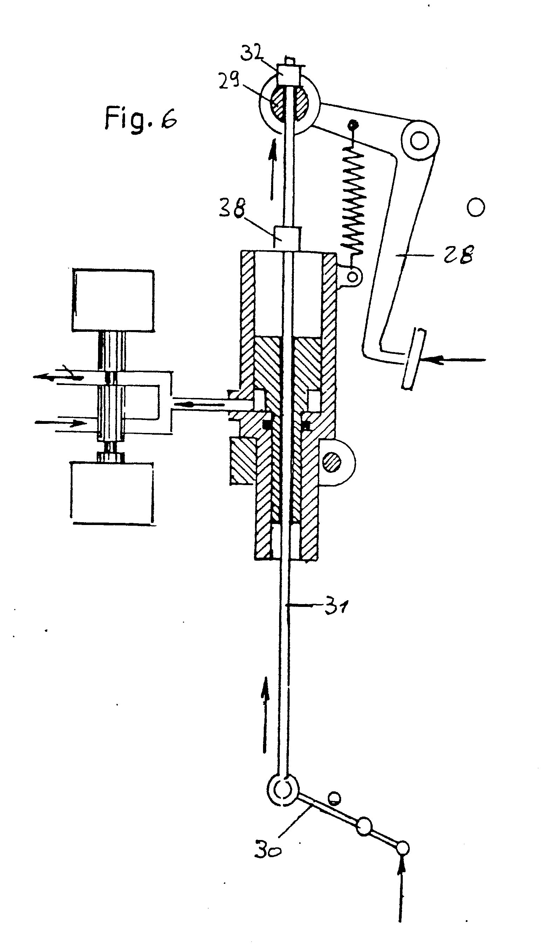

In Fig. 6 ist die Kupplungsbetätigungseinrichtung in dem Zustand dargestellt, wenn das Kupplungspedal 28 durchgetreten ist und dadurch die Kupplung geöffnet ist. Beim Durchtreten des Kupplungspedals 28 wird der Seilzug 31 nach oben gezogen und damit der Kupplungshebel 30 gedreht und die Kupplung geöffnet, wobei der Hilfskolben 34 in seiner Ausgangsstellung verbleibt und nicht mitgenommen wird.

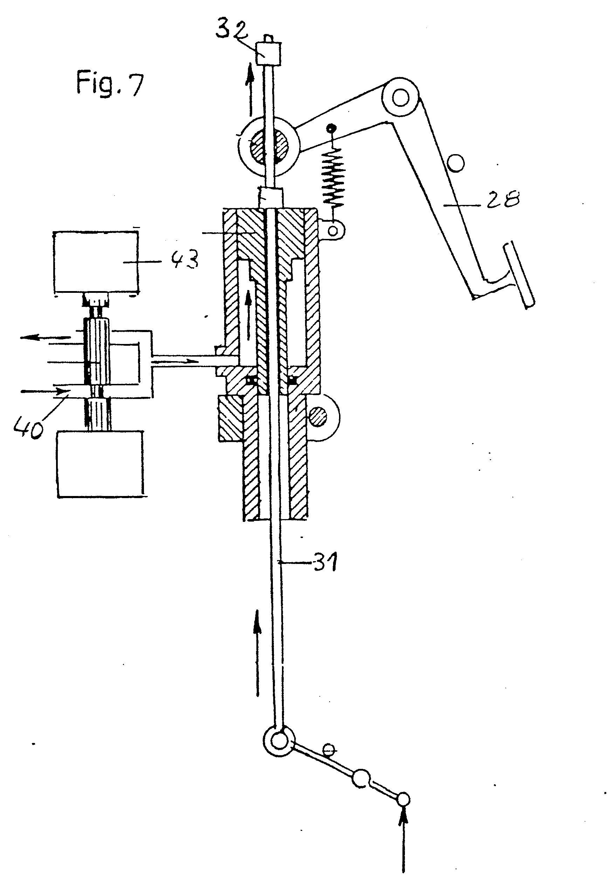

In Fig. 7 ist der Zustand gezeigt, bei dem die Kupplung mit Hilfe des Hilfskolbens 34 geöffnet ist. Durch einen kurzen Stromimpuls an dem Elektromagneten 43 wird der Hubraum des Hilfskolbens 34 von der Abflußleitung 41 abgetrennt und mit der Druckleitung 40 verbunden. Dadurch baut sich im Hubraum des Hilfskolbens 34 ein Druck auf, der den Hilfskolben 34 nach oben verschiebt und den Seilzug 31 mit Hilfe des Anschlags 38 mitnimmt. Dadurch wird die Kupplung geöffnet, wobei der Seilzug 31 durch den Bolzen 29 am Kupplungspedal 28 frei durchbewegt wird. Das Kupplungspedal 28 wird somit durch die Bewegung des Hilfskolbens 34 nicht beeinflußt und wird nicht mitbewegt.

Andererseits kann in diesem Zustand, d. h. bei geöffneter Kupplung durch den Hilfskolben 34, das Kupplungspedal 28 ungehindert gegen die Kraft der Feder 26 durchgetreten werden und ist nicht blockiert.

Das dritte Ausführungsbeispiel gemäß Fig. 8 und Fig. 9 hat eine vorteilhafte, weitere Ausgestaltung der ersten Ausführungsform gemäß der Fig. 1 bis 4 zum Inhalt. Im ersten Ausführungsbeispiel wird das Kupplungspedal 12 mit Hilfe der Feder 13 gegen den Anschlag 14 gedrückt. Wenn im Freilauf gefahren wird, d. h. die Kupplung durch die Automatik geöffnet ist, ist die Anlageverbindung zwischen dem Kupplungspedal 12 und dem Hilfskolben 2 bzw. zwischen der Schubstange 11 und der Kolbenstange 8 (siehe Fig. 3) unterbrochen. Das Kupplungspedal ist hierbei nicht blockiert und kann gegen die Kraft der Feder 13 durchgetreten werden. Wenn die Kupplung durch die Freilaufautomatik geöffnet ist, hat der Fahrer daher bei der Kupplungsbetätigung nur die Kraft der Feder 13 zu überwinden. Wenn die Kupplung mit Hilfe des Kupplungspedals 12 geöffnet werden soll, muß der Fahrer sowohl die Kraft der Feder 13 am Kupplungspedal als auch die Kraft der Kupplungsfeder 24 überwinden. Das führt dazu, daß der Fahrer nachteilig unterschiedliche Rückstellkräfte am Kupplungspedal zu überwinden hat, je nachdem, welche Betriebsart eingeschaltet ist. Weiter tritt insgesamt durch die notwendige Hintereinanderschaltung der Kupplungsfeder 24 und der Feder 13 am Kupplungspedal 12 eine relativ große Gegenkraft bei der Kupplungsbetätigung nur durch das Kupplungspedal 12 auf.

Die dritte Ausführungsform gemäß Fig. 8 und Fig. 9 bringt demgegenüber eine Verbesserung dadurch, daß als Verbindungselement zwischen dem Geberkolben 2 und dem Kupplungspedal 12 ein Kolbenschieber 110 vorgesehen ist. Bei unbetätigter Kupplung liegt der Kolbenschieber 110 mit seiner einen Seite am Geberkolben 2 an und mit seiner anderen Seite am Kupplungspedal 12 bzw. der Schubstange 11. Der Kolbenschieber 110 ragt in den zweiten Hubraum 7 des Geberkolbens 2.

Aus Fig. 8 ist zu ersehen, daß bei einer Betätigung des Kupplungspedals 2 die Kraft von der Schubstange 11 auf den Kolbenschieber 110 und auf den Geberkolben 2 übertragen wird, so daß der Kolbenschieber 110 die gleiche Wirkung wie die Kolbenstange 8 des ersten Ausführungsbeispiels hat.

In Fig. 9 ist der Fall dargestellt, daß der Hubraum 7 mit Druck beaufschlagt ist. Dabei wird sowohl auf den Geberkolben 2 in Richtung auf den Nehmerkolben 21 wie auch auf den Kolbenschieber 110 in Richtung auf das Kupplungspedal 12 ein Druck ausgeübt. Durch die Druckwirkung auf den Geberkolben 2 ist der Nehmerkolben 21 nach rechts verschoben und die Kupplung dadurch geöffnet. Durch die Druckwirkung auf den Kolbenschieber 110 wird das Kupplungspedal 12 in seiner Ausgangsstellung gehalten. Das Kupplungspedal 12 ist dadurch nicht blockiert, da bei einer Betätigung Hydraulikflüssigkeit aus dem Hubraum 7 durch den Kolbenschieber 110 in die Druckleitung 17 zurückgedrückt wird.

Beim dritten Ausführungsbeispiel muß bei der Betätigung der Kupplung nur mit dem Kupplungspedal 12 im wesentlichen die Kraft der Kupplungsfeder 24 überwunden werden. Falls das Kupplungspedal 12 bei betätigter Kupplung durch die Freilaufautomatik (Fig. 9) durchgetreten wird, ist es erwünscht, daß dabei die gleichgroße Kraft wie vorher aufgewendet werden muß. Dies ist einfach dadurch möglich, daß die Druckkraft auf den Kolbenschieber 110 so groß gewählt wird wie die Federkraft der Kupplungsfeder 24. Dies ist durch entsprechende Dimensionierung der wirksamen Druckfläche des Kolbenschiebers 110 in Bezug zum anstehenden Druck im Hubraum 7 möglich.

Die Steuereinrichtung zur Ansteuerung der Elektromagnete 18, 19 bzw. 42, 43 ist nicht näher dargestellt, ist aber bevorzugt so durchzuführen, daß am Gaspedal ein Schalter angeordnet ist, der bei zurückgenommenem Gaspedal schließt und dadurch ein Stromimpuls von einem Steuergerät auf den Elektromagneten zum Öffnen der Kupplung gegeben wird. Beim Wiederbetätigen des Gaspedals wird dann ein Stromimpuls an den Elektromagneten zum Schließen der Kupplung gegeben. Dieser Stromimpuls könnte beispielsweise auch erst bei synchronen Drehzahlen zwischen der Motorabtriebswelle und der Getriebeantriebswelle von einem Drehzahlvergleichsgerät abgegeben werden. Das bedeutet, daß jeweils beim Zurücknehmen des Gaspedals bei weiter eingelegtem Gang die Kupplung zur Erzielung des Freilaufeffekts geöffnet wird. Es versteht sich von selbst, daß in der Steuereinrichtung ein Handschalter zur Abschaltung der Freilaufautomatik vorgesehen sein muß. Weiter könnte das automatische Einsetzen des Freilaufeffekts von einer Reihe von Nebenbedingungen, beispielsweise dem eingelegten Gang, dem Erreichen einer bestimmten Mindestgeschwindigkeit usw., abhängig gemacht werden.

**0090945**

Zusammenfassend wird festgestellt, daß durch den Erfindungsgegenstand eine einfache Betätigungseinrichtung in einer Freilaufautomatik aufgezeigt wurde, die insbesondere bei den Ausführungsbeispielen 1 und 3 nur kleine Umgestaltungen des Geberzylinders erfordert, so daß die Kupplung unabhängig vom Kupplungspedal für einen intermittierenden Fahrbetrieb bequem vom Fahrer betätigt werden kann.

Herr

Dieter Delwing

Im Rötel 21

CH - 6300 Zug

Faußstraße 30
D-8070 Ingolstadt

Telefon (08 41) 7 24 12
Telegramm neupat Ingolstadt
Telex 5 5809 nepa d

P 29DE/83/89

Patentansprüche

1. Kupplungsbetätigungseinrichtung einer Freilaufvorrichtung in einem Kraftfahrzeug
mit einer Kupplung mit einem Kupplungshebel,
mit einem Kupplungspedal zur Betätigung der Kupplung und
mit einer zusätzlichen Betätigungseinrichtung für die Kupplung,
dadurch gekennzeichnet,

daß die zusätzliche Betätigungseinrichtung eine Hilfskolben-Zylinder-Einheit (1, 2; 34) enthält,

daß der Hilfskolben (2; 34) der Hilfskolben-Zylinder-Einheit (1, 2; 34) auf die den Kupplungshebel (23; 30) betätigenden Mittel wie Flüssigkeitssäule, Seilzug (31) oder dergleichen unmittelbar wirkt,

daß der Hubraum des Hilfskolbens (2; 34) mit Hilfe eines Zweiwegeventils (15; 39) entweder mit einer Druckleitung (17; 40) einer Druckquelle oder mit einer Abflußleitung (16; 41) verbindbar ist, daß bei einer Verbindung des Hubraums des Hilfskolbens (2; 34) mit der Druckquelle die den Kupplungshebel (23; 30) betätigenden Mittel unabhängig von einer Bewegung des Kupplungspedals (12; 28) in Richtung zum Öffnen der Kupplung in Bewegung gesetzt werden,

und daß das Zweiwegeventil (15; 39) zwei Elektromagnete (18, 19; 42, 43) enthält, die durch Impulse angesteuert werden und das Zweiwegeventil (15; 39) jeweils in eine stabile Lage steuern.

2. Kupplungsbetätigungseinrichtung nach Anspruch 1, dadurch gekennzeichnet, daß für den Fall, daß die Verbindung zwischen dem Kupplungspedal (12) und dem die Kupplung betätigenden Kupplungshebel (23) allein durch Hydraulik erfolgt, der mit dem Kupplungspedal (12) bewegungsübertragend verbundene hydraulische Geberkolben (2) zwei Kolbenhubräume (4, 7) besitzt, von welchen der eine mit dem Kupplungshebel (23) betätigenden Nehmer-Kolbenhubraum (4a) und der andere mit dem Zweiwegeventil (15) verbunden ist.

3. Kupplungsbetätigungseinrichtung nach Anspruch 1 oder 2, dadurch gekennzeichnet, daß die Bewegung des Geberkolbens (2) auf einen bestimmten Weg beschränkt ist.

4. Kupplungsbetätigungseinrichtung nach Anspruch 1 bis 3, dadurch gekennzeichnet, daß die Kolbenstange (8) des Geberkolbens (2) auf dem Kupplungspedal (12) anstößt und aufliegt.

5. Kupplungsbetätigungseinrichtung nach Anspruch 1 bis 4, dadurch gekennzeichnet, daß die Lage des mit einer Feder (13) belasteten Kupplungspedals (12) im unbetätigten Zustand durch einen Anschlag (14) bestimmt ist.

6. Kupplungsbetätigungseinrichtung nach Anspruch 1, dadurch gekennzeichnet, daß für den Fall, daß die Verbindung zwischen dem Kupplungspedal (28) und dem die Kupplung betätigenden Kupplungshebel (30) mechanisch, z. B. durch einen Seilzug (31) oder dergleichen erfolgt, ein hydraulisch arbeitender Kolben (34) mit einer Kolbenstange (35) vorgesehen ist, wobei die Kolbenstange (35) mit einer durchgehenden zentralen Bohrung versehen ist, durch die den Kupplungshebel (30) betätigende Mittel, wie ein Seilzug (31) oder dergleichen freibeweglich durchgeführt sind, und an den den Kupplungshebel (30) betätigenden Mitteln ein Anschlag (38) angeordnet ist, den der unter Druck gesetzte Kolben (34) in Richtung zum Öffnen der Kupplung mitnimmt.

7. Kupplungsbetätigungseinrichtung nach Anspruch 6, dadurch gekennzeichnet, daß der die Kupplung betätigende Seilzug (31) oder dergleichen mit dem Kupplungspedal (28) in der Weise verbunden ist, daß der Seilzug (31) durch die Bohrung eines Bolzens (29) am Kupplungspedal (28) freibeweglich durchgeführt ist und durch das Kupplungspedal (28) über einen am Seilzug (31) befestigten Anschlag (32) in Richtung zum Öffnen der Kupplung mitgenommen wird.

8. Kupplungsbetätigungseinrichtung nach Anspruch 2, dadurch gekennzeichnet, daß als Verbindungselement zwischen dem Geberkolben (2) und dem Kupplungspedal (12) ein Kolbenschieber (110) vorgesehen ist, der bei unbetätigter Kupplung einerseits mit dem Geberkolben (2) und andererseits mit dem Kupplungspedal (12) in Anlageverbindung steht und in den zweiten Hubraum (7) des Geberkolbens (2) ragt, so daß bei einer Verbindung des zweiten Hubraums (7) mit der Druckleitung (17) der Geberkolben (2) in eine Richtung bewegt wird,und auf den Kolbenschieber (110) in die andere Richtung,auf das Kupplungspedal (12) zu,ein Druck ausgeübt wird.

Fig.1

Fig.2

Fig.3

Fig.4

Fig. 5

0090945

P 29 DE 1 83 / 89

4/6

0090945

Fig. 6

32

29

38

28

31

30

5/6

Fig.7

0090945

Fig. 8

Fig. 9